# EUROPEAN PATENT SPECIFICATION

(11) **EP 1 445 854 B1**
(45) Date of publication and mention of the grant of the patent: **08.09.2004**
(21) Application number: 03425067.0
(22) Date of filing: 05.02.2003
(51) Int. Cl.: H02M 7/06, H02M 3/156

(54) **Power supply**
Stromversorgung
Alimentation de courant

(43) Date of publication of application: 11.08.2004
(73) Proprietor: Bonferraro S.p.A., 37060 Bonferraro (VR) (IT)
(72) Inventor: Bissoli, Attilio, 37057 Raldon di San Giovanni Lupatoto VR (IT); Righetti, Marco, 46032 Castelbelforte MN (IT); Carrara, Alberto, 20026 Novate MI (IT)
(74) Representative: Pizzoli, Antonio

(56) References cited:
- US-A- 5 773 965
- US-A- 5 933 342
- PATENT ABSTRACTS OF JAPAN vol. 2000, no. 22, 9 March 2001 (2001-03-09) & JP 2001 136736 A (ROHM CO LTD), 18 May 2001 (2001-05-18)

## Description

The present invention relates to a power supply, in particular a low power supply which can be employed for supplying electric energy to the electric and/or electronic devices present in the household appliances.

In the known power supplies for household appliances, as in US 5 933 342, the continuous supply voltage necessary for the working of the inner devices is obtained through a circuit comprising a linear transformer which lowers the sinusoidal input voltage, which is then rectified as a double half-wave by means of a diode bridge, filtered by an electrolytic capacitor and adjusted through a positive or negative voltage regulator, according to the requirements. Though it is flexible, since the output voltage and the transformer power can be chosen according to the necessary requirements, this known power supply is relatively expensive due to the presence of the transformer.

If the devices to be powered do not require high powers, it is possible to use a circuit which employs, for transforming the network voltage, a capacitor connected in series to the supply line, instead of a transformer. This solution allows to notably decrease the costs with respect to the above mentioned first known power supply, but does not have the same flexibility since the maximum current which can be absorbed by the circuit directly depends on the value of the capacitance of the capacitor, which, for reasons of size and costs, cannot be greater than 2 µF. After this capacitor a single half-wave rectification is performed through a diode bridge, so as to obtain two continuous different voltages with respect to the same ground reference, which can power electronic devices, for example 5 V microprocessors, or electric devices, for example 12 V relays. Two Zener diodes connected to as many resistors allow to adjust the output voltages with a minimum cost.

However, this second known power supply has an important drawback: if the circuits downstream the power supply do not absorb current or have a modest absorption, the energy drawn from the power network through the diodes which rectify the voltage is "discharged" to the other stage through the Zener diodes, so that the latter, as well as the resistors connected thereto, must be chosen so as to bear the working in this condition, with particular problems with respect to the power dissipation.

It is therefore an object of the present invention to provide a power supply which is free from said disadvantages. This object is achieved by means of a power supply, the main features of which are specified in the first claim and other features are specified in the subsequent claims.

Thanks to the use of one or more SCRs, the power supply according to the present invention can "discharge" the energy in excess drawn from the network without the high power dissipation on the Zener diodes of the known power supplies. The main features of the present power supply lie thus in its low cost and in its very low power dissipation.

As a matter of fact, when the SCR begins to conduct, it acts like a short-circuit, so that the voltage at its ends is the direct anode/cathode voltage which is low and independent from the desired output voltages. The power dissipation on this component is therefore extremely low. In practice, the task of the SCR is to "discharge" the energy in excess directly to the network without causing a strong power dissipation. It is therefore unnecessary that the Zener diode and the resistor connected thereto are power devices, since also their dissipation is very low.

The power supply according to the present invention therefore allows to keep the desired low-cost features without the classic dissipation issues, thereby obtaining a remarkable improvement in the reliability during the use and in the meantime reducing the energy dissipated in the known power supplies due to the Joule effect.

Furthermore, the power supply according to the present invention can be manufactured prevalently with SMD (Surface Mounted Device) technology components, with consequent reliability improvement and decrease of size and costs.

Further advantages and features of the power supply according to the present invention will become evident to those skilled in the art from the following detailed and non-limiting description of two embodiments thereof, with reference to the attached drawings, wherein:
- figure 1 shows the electric scheme of the power supply according to the first embodiment of the invention; and
- figure 2 shows the electric scheme of the power supply according to the second embodiment of the invention.

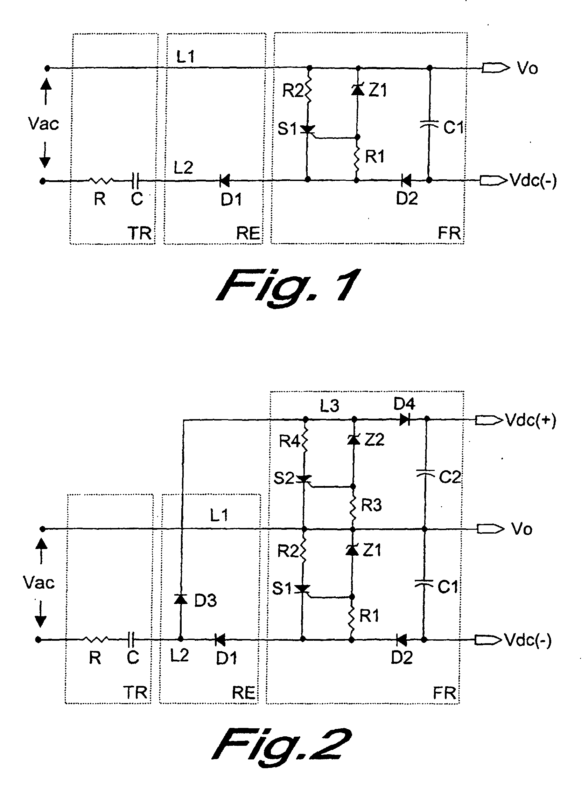

Referring to figure 1, it is seen that the power supply according to the first embodiment of the present invention comprises in a known way a transformer stage TR connected to a rectifier stage RE connected in turn to a filter and regulator stage FR. Two inputs Vac of the transformer stage TR are suitable for being connected to an alternated current source, while at least to outputs Vo and Vdc- of the filter and regulator stage FR are suitable for supplying a substantially constant voltage, at about 0 V and -5 V, respectively, for the power supply of electric and/or electronic devices.

The transformer stage TR comprises in a known way two parallel lines L1, L2 connecting the inputs Vac to the rectifier stage RE. The second line L2 comprises a capacitor C and a resistor R connected in series. In the present embodiment of the invention, suitable for input voltages of about 220 V, capacitor C is a X2-type capacitor with a capacitance of 1,5 µF, while resistor R is a wire or metal oxide resistor, has a resistance of 33 Ω and can dissipate a power of 1 W. Resistor R allows to avoid overvoltage phenomena at the Vac inputs during the start, especially when the latter occurs at the maximum or minimum moment of a half-wave of the network voltage.

The rectifier stage RE comprises two parallel lines L1, L2 connecting the lines of the transformer stage TR to the filter and regulator stage FR. The second line L2 comprises a first diode D1 connected in series to this line for instance with the cathode facing input Vac, so as to conduct during the negative half-wave of the network voltage. Diode D1 is a GF1M-type diode with SMD technology or 1N4007-type, so as to bear the abrupt voltage transitions which may occur at the power supply start.

The filter and regulator stage FR comprises two parallel lines L1, L2 connecting lines L1, L2 of the rectifier stage RE to outputs Vo and Vdc-. The first line L1 directly connects an input Vac to output Vo, while the second line L2 comprises at least one second diode D2 connected in series to this line and to diode D1, with the cathode facing input Vac so as to conduct during the negative half-wave of the network voltage. Lines L1 and L2 are mutually connected by a resistor R1 and a Zener diode Z1 connected in series to one another, as well as by a resistor R2 and a SCR (Silicon Controlled Rectifier) S1 connected in series to one another. The cathode of SCR S1 is connected to the anode of diode D1 and to the cathode of diode D2, the anode of SCR S1 is connected to resistor R2, while the gate of SCR S1 is connected between the Zener diode Z1 and resistor R1. The latter is therefore connected between the Zener diode Z1 and diodes D1 and D2. Further, the two parallel lines L1, L2 of the filter and regulator stage FR are suitably connected to one another by a capacitor C1 arranged between diode D1 and output Vdc-.

Resistor R1 is used for biasing the Zener diode Z1 and has a relatively low resistance. As a matter of fact, the voltage difference on resistor R1 coincides with the direct gate/cathode bias voltage (about 0,7 V) when SCR S1 begins to conduct, so that a low resistance is sufficient for obtaining a current of some mA in the Zener diode Z1. When SCR S1 conducts, the voltage on the Zener diode Z1 is zero, so that the dissipation of these components is extremely reduced. For example, with a SMD technology a SOT23-type (5,1 V; 0,25 mW) Zener diode Z1 and a 0603-type (50 Ω) resistor R1 can be employed.

Resistor R2 is used for rounding the voltage steps due to the transition of SCR S1, which may trigger oscillations caused by the presence of capacitor C and by parasitic inductances present in the circuit. With a SMD technology a 0603-type (5 Ω) resistor R2 can be employed, which can generally dissipate the power in a suitable manner. If it cannot dissipate all the power, resistor R2 can be substituted by a plurality of resistors connected in parallel and having a total equivalent resistance equal to the resistance of resistor R2. With a SMD technology, SCR S1 can be of the SOT223 type, which can work with a 600 V voltage, with average currents of about 200 mA and peak capacitances similar to those of diode D1.

Capacitor C1 has a minimum capacitance of 470 µF, in particular 1 mF at low voltages (6,3 V), so as to eliminate the output voltage ripple.

During the use, in the negative half-wave of the network sinusoid, diodes D1 and D2 conduct, so as to charge capacitor C1. Zener diode Z1 is cut off until the charge on capacitor C1 does not allow its conduction by reaching the inverse activation voltage. The gate of SCR S1 is therefore at the same voltage of the cathode and thus the SCR is cut off. In these conditions capacitor C1 continues to be charged.

When Zener diode Z1 begins to conduct since it has reached the inverse activation voltage, the gate of SCR S1 receives a current (some tenth of µA) sufficient for starting the conduction, thereby causing a short-circuit between anode and cathode and discharging the energy in excess directly to the network. At this moment the voltage on resistor R1 is equal to the gate/cathode junction of the conducting SCR S1.

The continuous output voltage thus depends on the activation voltage of Zener diode Z1, on the gate/cathode bias voltage of SCR S1 and on the bias voltage of diode D2. In any case, all these voltages are very stable for the use required by the devices connected to outputs Vo and Vdc-.

When SCR S1 begins to conduct, the following phenomena occur:
- diode D2 cuts off, thereby forcing capacitor C1 to keep the voltage at its ends stable. This naturally depends on the load connected to outputs Vo and Vdc-, as well as on the capacitance of capacitor C1;
- Zener diode Z1 and resistor R1 are not crossed anymore be the bias current which was used for bringing SCR S1 in conduction and therefore do not dissipate energy (the voltage at their ends is zero).
- the sudden short-circuit of SCR S1 generates a step change of the voltage which is rounded by resistor R2.

The circuit of figure 1 cannot discharge or use the energy transmitted during the positive half-wave of the network sinusoid, for which a further regulating device or circuit (not shown in the figure) connected to lines L1 and L2, for instance comprising a capacitor or a rectifying diode, can be used.

Referring now to figure 2, it is seen that the power supply according to the second embodiment of the present invention always comprises a transformer stage TR connected to a rectifier stage RE connected in turn to a filter and regulator stage FR.

The transformer stage TR, as in the first embodiment, comprises a resistor R and a capacitor C, while the rectifier stage RE comprises, besides diode D1, also a diode D3 connected in series to a third line L3 starting from line L2 comprising diode D1 and continues in the filter and regulator stage FR up to a third output Vdc+ suitable for supplying a positive voltage, for instance 12 V, with respect to output Vo.

The filter and regulator stage FR comprises the same circuit of the first embodiment made up of SCR S1, resistors R1 and R2, Zener diode Z1, diode D2 and capacitor C1, as well as a second parallel circuit which is connected between lines L1 and L3 which end at outputs Vo, Vdc+ and is made up of a SCR S2, a pair of resistors R3 and R4, a Zener diode Z2, a diode D4 and a capacitor C2. The devices of this second circuit are substantially the same of the first circuit and are connected substantially in the same way, with the difference that diodes D3 and D4 are connected with the cathodes facing output Vdc+, so as to conduct during the positive half-wave of the network voltage and work in the same way as the first circuit works during the negative half-wave of the network voltage.

## Claims

1. Power supply comprising a transformer stage (TR), a rectifier stage (RE) and a filter and regulator stage (FR) mutually connected by at least two lines (L1, L2; L3), wherein two inputs (Vac) of the transformer stage (TR) are suitable for being connected to an alternated voltage source, while at least two outputs (Vo, Vdc-; Vdc+) of the filter and regulator stage (FR) are suitable for supplying a substantially constant voltage for powering electric and/or electronic devices, wherein at least one (L2; L3) of said lines (L1, L2; L3) comprises at least two diodes (D1, D2; D3, D4) connected in series, and that said at least two lines (L1, L2; L3) are mutually connected through at least one resistor (R1; R3) and a Zener diode (Z1; Z2) connected in series to each other, a capacitor (C1; C2), as well as a SCR (S1; S2) having the gate connected between the Zener diode (Z1; Z2) and the first resistor (R1; R3).

2. Power supply according to the previous claim, **characterized in that** the cathode of the SCR (S1) is connected to the two diodes (D1, D2), the anode of the SCR (S1) is connected to one (L1) of said lines (L1, L2; L3) and the cathode of the two diodes (D1) faces an input (Vac) of the transformer stage (TR), so as to conduct during the negative half-wave of the network voltage.

3. Power supply according to claim 1, **characterized in that** the anode of the SCR (S2) is connected to the two diodes (D3, D4), the cathode of the SCR (S1) is connected to one (L1) of said lines (L1, L2; L3) and the cathode of the two diodes (D1) faces an output (Vdc+) of the filter and regulator stage (FR), so as to conduct during the positive half-wave of the network voltage.

4. Power supply according to one of the previous claims, **characterized in that** the SCR (S1; S2) is connected to one (L1; L3) of said lines (L1, L2; L3) through at least a second resistor (R2; R4).

5. Power supply according to one of the previous claims, **characterized in that** the capacitor (C1; C2) is arranged between the second diode (D2; D4) and an output (Vdc-; Vdc+) of the filter and regulator stage (FR).

6. Power supply according to one of the previous claims, **characterized in that** one (L1) of said lines (L1, L2; L3) directly connects an input (Vac) of the transformer stage (TR) to an output (Vo) of the filter and regulator stage (FR).

7. Power supply according to one of the previous claims, **characterized in that** the transformer stage (TR) comprises at least one capacitor (C) connected in series to one (L2) of said lines (L1, L2; L3).

8. Power supply according to claim 7, **characterized in that** the transformer stage (TR) comprises a resistor (R) connected in series to said capacitor (C).

9. Power supply according to one of the previous claims, **characterized in that** the first diode (D1; D3), the second diode (D2; D4), the Zener diode (Z1; Z2), the SCR (S1; S2), the first resistor (R1; R3) and/or the second resistor (R2; R4) are carried out with a SMD technology.

10. Power supply according to one of the previous claims, **characterized in that** one (L2) of said lines (L1, L2; L3) is connected to a third line (L3) connected in turn to a third output (Vdc+) and to a parallel circuit comprising a second pair of diodes (D3, D4), a second SCR (S2), a second pair of resistors (R3, R4), a second Zener diode (Z2) and a second capacitor (C2).

## Patentansprüche

1. Stromversorgung, umfassend eine Transformatorstufe (TR), eine Gleichrichterstufe (RE) sowie eine Filter- und Reglerstufe (FR), die gegenseitig angeschlossen sind über mindestens zwei Leitungen (L1, L2, L3), wobei zwei Eingänge (Vac) der Transformatorstufe (TR) geeignet sind angeschlossen zu werden an eine Wechselstromquelle, während mindestens zwei Ausgänge (Vo, Vdc-; Vdc+) der Filter- und Reglerstufe (FR) geeignet sind zur Bereitstellung einer im wesentlichen konstanten Spannung zur Versorgung elektrischer und/oder elektronischer Einrichtungen, wobei mindestens eine (L2; L3) der Leitungen (L1, L2, L3) mindestens zwei Dioden (D1, D2; D3, D4) umfaßt, die in Reihe geschaltet sind, und wobei mindestens zwei Leitungen (L1, L2; L3) gegenseitig angeschlossen sind durch mindestens einen Widerstand (R1; R3) und eine Zenerdiode (Z1; Z2), angeschlossen in Reihe zueinander, einen Kondensator (C1; C2) wie auch einen Thyristor (S1; S2), dessen Gate angeschlossen ist zwischen der Zenerdiode (Z1; Z2) und dem ersten Widerstand (R1; R3).

2. Stromversorgung gemäß dem vorangehenden Anspruch, **dadurch gekennzeichnet, daß** die Kathode des Thyristors (S1) angeschlossen ist an die beiden Dioden (D1, D2), die Anode des Thyristors (S1) angeschlossen ist an eine (L1) der Leitungen (L1, L2; L3) und die Kathode der beiden Dioden (D1) einem Eingang (Vac) der Transformatorstufe (TR) zugewandt ist, um zu leiten während der negativen Halbwelle der Netzwerkspannung.

3. Stromversorgung gemäß Anspruch 1, **dadurch gekennzeichnet, daß** die Anode des Thyristors (S2) angeschlossen ist an die beiden Dioden (D3, D4), die Kathode des Thyristors (S1) angeschlossen ist an eine (L1) der Leitungen (L1, L2; L3) und die Kathode der beiden Dioden (D1) einem Ausgang (Vdc+) der Filter- und Reglerstufe (FR) zugewandt ist, um zu leiten während der positiven Halbwelle der Netzwerkspannung.

4. Stromversorgung gemäß einem der vorangehenden Ansprüche, **dadurch gekennzeichnet, daß** der Thyristor (S1; S2) an eine (L1; L3) der Leitungen (L1, L2; L3) angeschlossen ist über mindestens einen zweiten Widerstand (R2; R4).

5. Stromversorgung gemäß einem der vorangehenden Ansprüche, **dadurch gekennzeichnet, daß** der Kondensator (C1; C2) angeordnet ist zwischen der zweiten Diode (D2; D4) und einem Ausgang (Vdc-; Vdc+) der Filter- und Reglerstufe (FR).

6. Stromversorgung gemäß einem der vorangehenden Ansprüche, **dadurch gekennzeichnet, daß** eine (L1) der Leitungen (L1, L2; L3) direkt einen Eingang (Vac) der Transformatorstufe (TR) mit einem Ausgang (Vo) der Filter- und Reglerstufe (FR) verbindet.

7. Stromversorgung gemäß einem der vorangehenden Ansprüche, **dadurch gekennzeichnet, daß** die Transformatorstufe (TR) mindestens einen Kondensator (C) umfaßt, der in Reihe geschaltet ist mit einer (L2) der Leitungen (L1, L2; L3).

8. Stromversorgung gemäß Anspruch 7, **dadurch gekennzeichnet, daß** die Transformatorstufe (TR) einen Widerstand (R) umfaßt, der in Reihe mit dem Kondensator (C) geschaltet ist.

9. Stromversorgung gemäß einem der vorangehenden Ansprüche, **dadurch gekennzeichnet, daß** die erste Diode (D1; D3), die zweite Diode (D2; D4), die Zenerdiode (Z1; Z1), der Thyristor (S1; S2), der erste Widerstand (R1; R3) und/oder der zweite Widerstand (R2; R4) in einer SMD-Technologie ausgeführt sind.

10. Stromversorgung gemäß einem der vorangehenden Ansprüche, **dadurch gekennzeichnet, daß** eine (L2) der Leitungen (L1, L2; L3) an eine dritte Leitung (L3) angeschlossen ist, angeschlossen wiederum an einen dritten Ausgang (Vdc+) und an eine Parallelschaltung, umfassend ein zweites Paar von Dioden (D3, D4), einen zweiten Thyristor (S2), ein zweites Paar von Widerständen (R3, R4), eine zweite Zenerdiode (Z2) und einen zweiten Kondensator (C2).

## Revendications

1. Alimentation de courant comportant un étage transformateur (TR), un étage redresseur (RE) et un étage filtre et régulateur (FR) reliés entre eux par l'intermédiaire d'au moins deux lignes (L1, L2; L3) dans lesquelles deux entrées (Vac) de l'étage transformateur (TR) sont adaptées à être reliées à une source de tension alternative, lorsque au moins deux sorties (Vo, Vdc-; Vdc+) de l'étage filtre et régulateur (FR) sont adaptées alimenter une tension sensiblement constante pour l'alimentation des dispositifs électriques et/ou électroniques, dans laquelle au moins une (L2; L3) desdites lignes (L1, L2; L3) comporte au moins deux diodes (D1, D2; D3, D4) reliées en série, et que lesdites au moins deux lignes (L1, L2; L3) sont reliés mutuellement par l'intermédiaire de au moins un premier résisteur (R1; R3) et une diode zener (Z1; Z2) reliées en série entre eux, un condensateur (C1; C2), ainsi que un RCS (S1; S2) ayant la gâchette reliée entre la diode zener (Z1; Z2) e le premier résisteur (R1; R3).

2. Alimentation de courant, selon la revendication précédente, **caractérisée en ce que** la cathode du RCS (S1) est reliée aux deux diodes (D1, D2), l'anode du RCS (S1) est reliée à une (L1) desdites lignes (L1, L2; L3) e la cathode des deux diodes (D1) est tournée vers une entrée (Vac) de l'étage transformateur (TR), de façon à conduire de la tension réseau au cours de la demi-onde négative.

3. Alimentation de courant, selon la revendication 1, **caractérisée en ce que** l'anode du RCS (S2) è reliée aux deux diodes (D3, D4), la cathode du RCS (S1) est reliée à une (L1) desdites lignes (L1, L2; L3) e la cathode des deux diodes (D1) est tournée vers une sortie (Vdc+) de l'étage filtre et régulateur (FR), de manière à conduire de la tension réseau au cours de la demi-onde positive.

4. Alimentation de courant, selon l'une des revendications précédentes, **caractérisée en ce que** le RCS (S1; S2) est relié à une (L1; L3) desdites lignes (L1, L2; L3) par l'intermédiaire d'au moins un second résisteur (R2; R4).

5. Alimentation de courant, selon l'une des revendications précédentes, **caractérisée en ce que** le condensateur (C1; C2) est disposé entre la seconde diode (D2; D4) et une sortie (Vdc-; Vdc+) de l'étage filtre et régulateur (FR).

6. Alimentation de courant, selon l'une des revendications précédentes **caractérisée en ce que** l'une (L1) desdites lignes (L1, L2; L3) relie directement une entrée (Vac) de l'étage transformateur (TR) à une sortie (Vo) de l'étage filtre et régulateur (FR).

7. Alimentation de courant, selon l'une des revendications précédentes, **caractérisée en ce que** le l'étage transformateur (TR) comporte au moins un condensateur (C) relié en série à une (L2) desdites lignes (L1, L2; L3).

8. Alimentation en courant, selon la revendication 7, **caractérisée en ce que** l'étage transformateur (TR) comporte un résisteur (R) relié en série audit condensateur (C).

9. Alimentation de courant, selon l'une des revendications précédentes, **caractérisée en ce que** la première diode (D1; D3), la seconde diode (D2; D4), la diode zener (Z1; Z2), l'RCS (S1; S2), le premier résisteur (R1; R3) et/ou le second résisteur (R2; R4) sont réalisés avec une technologie CMS.

10. Alimentation de courant, selon l'une des revendications précédentes, **caractérisée en ce que** une (L2) desdites lignes (L1, L2; L3) est reliée à une troisième ligne (L3) reliée à son tour à une troisième sortie (Vdc+) et à un circuit parallèle comportant une seconde couple de diodes (D3, D4), un second RCS (S2), une seconde couple de résisteurs (R3, R4), une seconde diode zener (Z2) et un second condensateur (C2).
